**Europäisches Patentamt**

**European Patent Office**

**Office européen des brevets**

(11) Veröffentlichungsnummer: **0 108 257**

**A2**

(12) # EUROPÄISCHE PATENTANMELDUNG

(21) Anmeldenummer: **83109959.3**

(22) Anmeldetag: **05.10.83**

(51) Int. Cl.³: **B 60 G 9/00**

(30) Priorität: **07.10.82 DE 3237165**

(43) Veröffentlichungstag der Anmeldung:
**16.05.84** Patentblatt **84/20**

(84) Benannte Vertragsstaaten:
**DE FR GB IT SE**

(71) Anmelder: BAYERISCHE MOTOREN WERKE
Aktiengesellschaft
Postfach 40 02 40 Petuelring 130
D-8000 München 40(DE)

(72) Erfinder: Hartmann, Norbert
Wotanstrasse 8
D-8034 Germering(DE)

(72) Erfinder: Proske, Arnost
Roggensteinerstrasse 41
D-8080 Emmering(DE)

(74) Vertreter: Bullwein, Fritz
Bayerische Motoren Werke Aktiengesellschaft Postfach
40 02 40 Petuelring 130 AJ-33
D-8000 München 40(DE)

(54) **Schaltanordnung in Kraftfahrzeugen.**

(57) Einer Schaltanordnung in Kraftfahrzeugen, bei der ein
Elektromotor an einer Spannungsquelle anschaltbar ist, liegt
in einer Verbindungsleitung des Elektromotors zur Spannungsquelle ein Kontakt, der bei Bewegung des Elektromotors in den geschlossenen Zustand übergeht und dadurch
ein Leuchtelement einschaltet. Damit ergibt sich eine schaltungstechnisch besonders einfache Überprüfung des Elektromtors.

EP 0 108 257 A2

Schaltanordnung in Kraftfahrzeugen

Die Erfindung bezieht sich auf eine Schaltanordnung in Kraftfahrzeugen, bei der ein Elektromotor an einer Spannungsquelle anschaltbar ist.

Aufgrund der Vielzahl von Elektromotoren in Kraftfahrzeugen, die insbesondere für Stellantriebe verwendet werden, ergibt sich zwangsläufig die Notwendigkeit einer Überwachung dieser Motore. Dies ist insbesondere dann erforderlich, wenn die fehlende Funktionsfähigkeit eines Elektromotos nicht bzw. nicht ohne weiteres erkennbar ist. Beispiele hierfür sind die Antriebsmotore der Scheinwerfer-Reinigungsanlage, der Niveau-Höhenregulierung und der Scheinwerfer-Höheneinstellung.

Der Erfindung liegt die Aufgabe zugrunde, mit geringem schaltungstechnischen Aufwand eine wirksame Prüfeinrichtung für eine Schaltanordnung der eingangs genannten Art zu schaffen.

Die Erfindung löst diese Aufgabe durch eine an der Verbindungsleitung des Elektromotors zur Spannungsquelle angeschlossenen Leitung, in der ein bei Bewegung des Elektromotors in den geschlossenen Zustand übergehender Kontakt und ein Leuchtelement parallel zum Elektromotor liegen.

- 2 -

Das Leuchtelement zeigt durch sein Leuchten an, daß der Elektromotor tatsächlich arbeitet. Die Überwachung der Arbeit des Elektromotors schließt die Überwachung seiner Anschlußkontakte und seines ggf. vorhandenen Steuergeräts sowie der Funktionsfähigkeit des Stellantriebs für das beispielsweise nicht sichtbare Bauteil des Kraftfahrzeugs ein. Leuchtet das Leuchtelement hingegen nicht, so ergibt sich daraus zwangsläufig, daß auch der Elektromotor nicht arbeitet. Im Falle beispielsweise der Scheinwerfer-Reinigungsanlage ergibt sich damit, daß die Lichtqualität des Kraftfahrzeugs mit großer Wahrscheinlichkeit beeinträchtigt sein dürfte.

Eine besonders vorteilhafte Ausführungsform der Erfindung besteht darin, daß der Kontakt ein an sich bekannter Schaltkontakt für einen weiteren, bei Bewegung des Elektromotors eingeschalteten Elektromotor ist. In diesem Fall kann dieser ohnehin bereits vorhandene Schaltkontakt für die Überprüfung des (ersten) Elektromotors mitverwendet werden.

Durch einen geringfügigen zusätzlichen Schaltungsaufwand wird es möglich, auch den weiteren Elektromotor auf Funktionsfähigkeit zu überprüfen. Hierzu wird in einer weiteren Verbindungsleitung des Leuchtelements zur Spannungsquelle ein elektrischer Widerstand mit einer derartigen Dimensionierung angeordnet, daß das Leuchtelement und der weitere Elektromotor bei ununterbrochenem Stromkreis dieses Elektromotors über die weitere Verbindungsleitung nicht eingeschaltet werden. Ist dieser Stromkreis hingegen unterbrochen, so wird das Leuchtelement eingeschaltet und zeigt diese Unterbrechung und damit die fehlende Funktionsfähigkeit des weiteren Elektromotors an.

- 3 -

Diese zusätzliche Schaltungsmaßnahme besitzt eigenen erfinderischen Gehalt, da sie gerade bei geöffnetem, durch den (ersten) Elektromotor betätigtem Kontakt und damit bei abgetrenntem Stromkreis des ersten Elektromotors wirksam ist.

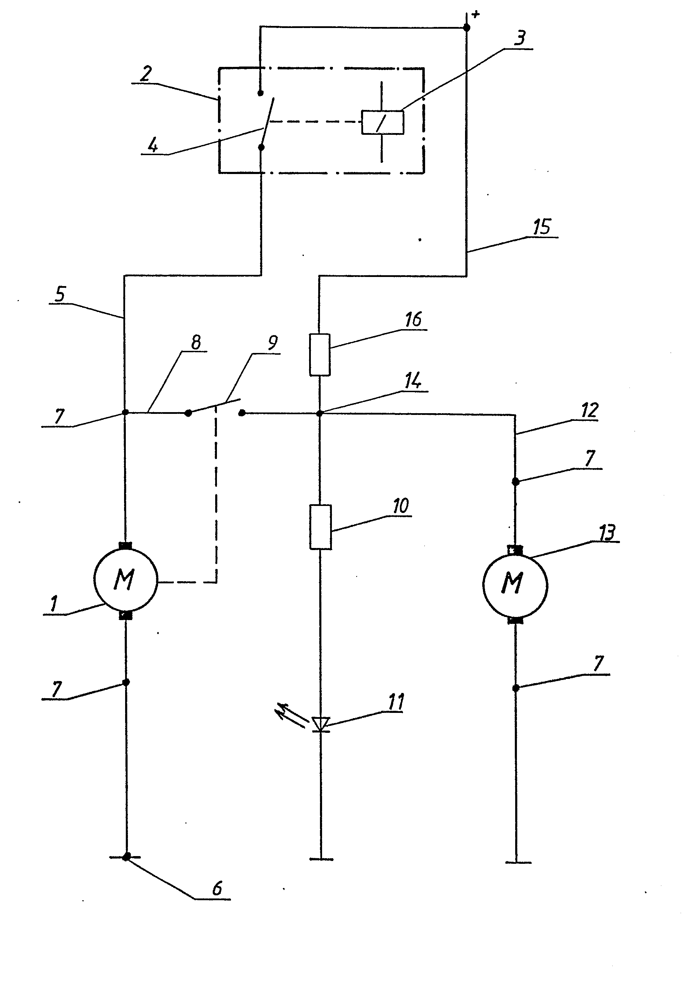

In der Zeichnung ist ein Ausführungsbeispiel der Erfindung dargestellt. Diese zeigt vereinfacht eine Scheinwerfer-Reinigungsanlage eines Kraftfahrzeugs.

Dabei ist ein erster Elektromotor 1 für einen nicht dargestellten Wischerantrieb durch ein Steuergerät 2 einschaltbar. Dieses enthält ein angedeutetes Relais 3, das beispielsweise bei jedem Einschalten der Beleuchtungsanlage des Kraftfahrzeugs kurzzeitig anzieht und über einen Schließerkontakt 4 den Elektromotor 1 mit einer Spannungsquelle (+) verbindet. In der Verbindungsleitung 5 des Elektromotors 1 zur Spannungsquelle bzw. einem Massepunkt 6 des Kraftfahrzeugs sind Anschlußkontakte 7 angeordnet.

Von der Verbindungsleitung 5 zweigt dort eine Leitung 8 ab, in der ein Kontakt 9 und damit in Reihe geschaltet ein elektrischer Widerstand 10 und eine Leuchtdiode 11 als Leuchtelement angeordnet sind. Der Kontakt 9 ist durch den Elektromotor 1 gesteuert und bei dessen Bewegung geschlossen.

Zwischen Kontakt 9 und Widerstand 10 zweigt eine weitere Leitung 12 ab, in der ein weiterer Elektromotor 13 der nicht dargestellten Waschpumpe liegt. Ferner ist am Abzweigpunkt 14 der Leitung 12 eine weitere Leitung 15 angeschlossen, in der ein Widerstand 16 liegt und die ebenfalls zur Spannungsquelle (+) führt.

Mit Hilfe der dargestellten Schaltungsanordnung ist es möglich, die Funktionsfähigkeit der beiden Elektromotore 1 und 13 zu überwachen. Im Ruhezustand, bei dem das Relais 3 nicht erregt ist, liegt keine Spannung am Elektromotor 1 an. Der Kontakt 9 ist geöffnet. die Leuchtdiode 11 erhält auch über die Leitung 15 keine ausreichende Spannung, da der Widerstand 16 so bemessen ist, daß bei gegebener Funktionsfähigkeit des Elektromotors 13, d.h. ununterbrochener Verbindung der Leitung 12 vom Anschlußpunkt 14 zum zugehörigen Massepunkt 6 die an der Leuchtdiode 11 abfallende Spannung nicht ausreicht, den Leuchtzustand hervorzurufen. Auch liegt die am Elektromotor 13 abfallende Spannung infolge der Parallelschaltung des Widerstands 10 und der Leuchtdiode 11 hierzu unter der Anlaufspannung, so daß auch der Elektromotor 13 nicht arbeitet.

Liegt hingegen eine Unterbrechung in der Leitung 12 vor, die zwangsläufig den Elektromotor 13 unwirksam macht, so reicht aufgrund der besonderen Dimensionierung des Widerstands 16 die an der Leuchtdiode abfallende Spannung aus, diese in den Leuchtzustand zu versetzen. Je nachdem, in welcher Weise die Leitung 15 an der Spannungsquelle angeschlossen ist, ergibt sich bei geöffnetem Kontakt 9 im Ruhezustand bzw. bei der weiter unten erläuterten Funktionsstörung des Elektromotors 1 aus dem Leuchten der Leuchtdiode 11 zwangsläufig ein Fehler im Stromkreis 12 und damit eine fehlende Funktionsfähigkeit des Elektromotors 13. Ist die Leitung 15 z.B. bei geschlossenem Zündschalter oder beispielsweise nur bei eingeschalteter Beleuchtungsanlage und damit geschlossenem, nicht dargestelltem Lichtschalter an der Spannungsquelle (+) angeschlossen, so leuchtet die Leuchtdiode 11 in diesem Fall nur bei eingeschalteter Zündung bzw. eingeschaltetem Licht.

Bei Funktionsfähigkeit des Elektromotors 1, geschlossener Leitung und ordnungsgemäßer Funktion des Steuergeräts 2 mit der Relaisspule 3 wird bei Betrieb des Elektromotors 1 der Kontakt 9 geschlossen. Die Leuchtdiode 11 liegt über den Widerstand 10 und den Arbeitskontakt 4 an der Spannungsquelle an und signalisiert durch ihr Leuchten den Betrieb des Elektromotors 1.

Ist die Funktionsfähigkeit des Elektromotors 1, beispielsweise durch einen Fehler des Steuergeräts 1 oder einen unterbrochenen Anschlußkontakt 7 gestört, so wird die Leuchtdiode 1 durch den weiterhin geöffneten Kontakt 9 nicht an der Spannungsquelle angeschlossen. Die fehlende Funktionsfähigkeit des Elektromotors 1 wird damit durch die Leuchtdiode gerade in der Weise angezeigt, daß diese wie der Elektromotor 1 nicht arbeitet.

Auf diese Weise eröffnet die Leuchtdiode 11 die Möglichkeit, zwei Elektromotore zu überprüfen. Leuchtet sie bei erwünschtermaßen ausgeschalteten Elektromotoren 1 und 13, so ergibt sich daraus, daß zumindest der Elektromotor 13 nicht betriebsfähig ist. Ihre Arbeitsweise entspricht damit der einer üblichen Warnlampe, z.B. in einer sogenannten Check-Control-Einrichtung. Leuchtet sie hingegen nur bei erwünschtem Betrieb der Anlage, so ergibt sich daraus eindeutig, daß der Elektromotor 1 und auch der Elektromotor 13 betriebsfähig sind. Ihre Wirkungsweise entspricht damit der einer an sich aus dem deutschen Patent 25 50 570 bekannten Gut-Anzeige.

Patentansprüche:

1. Schaltanordnung in Kraftfahrzeugen, bei der ein Elektromotor an einer Spannungsquelle anschaltbar ist, gekennzeichnet durch eine an der Verbindungsleitung (5) des Elektromotors (1) zur Spannungsquelle (+) angeschlossene Leitung (8), in der ein bei Bewegung des Elektromotors (1) in den geschlossenen Zustand übergehender Kontakt (9) und ein Leuchtelement (Leuchtdiode 11) parallel zum Elektromotor (1) liegen.

2. Schaltanordnung nach Anspruch 1, dadurch gekennzeichnet, daß der Kontakt (9) ein an sich bekannter Schaltkontakt für einen weiteren, bei Bewegung des Elektromotors (1) eingeschalteten weiteren Elektromotor (13) ist.

3. Schaltanorndung nach Anspruch 2, gekennzeichnet durch eine weitere Verbindungsleitung (15) des Leuchtelements (Leuchtdiode 11) zur Spannungsquelle (+) mit einem darin liegenden Widerstand (16) mit einer derartigen Dimensionierung, daß bei geöffnetem Kontakt (9) und im Normalfall weder das Leuchtelement (Leuchtdiode 11) noch der weitere Elektromotor (13) wirksam sind und bei einer Unterbrechung im Kreis (Leitung 12) des weiteren Elektromotors (13) das Leuchtelement (Leuchtdiode 11) allein eingeschaltet ist.

0108257